# EUROPEAN PATENT SPECIFICATION

(11) **EP 4 003 633 B1**
(45) Date of publication and mention of the grant of the patent: **24.12.2025**
(21) Application number: 20718204.9
(22) Date of filing: 27.03.2020
(51) Int. Cl.: B23K 26/00, B23K 26/0622, B23K 26/082, B23K 26/08, B23K 26/324, B23K 26/364, B23K 26/38, B23K 26/402, B23K 26/55, B23K 101/40, B23K 103/00

(54) **METHOD OF LASER BEAM MACHINING OF A TRANSPARENT BRITTLE MATERIAL**
VERFAHREN ZUM LASERSTRAHLBEARBEITEN EINES TRANSPARENTEN SPRÖDEN MATERIALS
PROCÉDÉ D'USINAGE PAR FAISCEAU LASER D'UN MATÉRIAU FRAGILE TRANSPARENT

(30) Priority: 06.09.2019 RU 2019128151
(43) Date of publication of application: 01.06.2022
(73) Proprietor: VPG Laserone LLC, 141195 Frayazino (RU)
(72) Inventor: ALIEV, Timur A., 141195 Frayazino (RU); EVTIKHIEV, Nikolai N., 141195 Frayazino (RU); KAPTAKOV, Mihail O., 141195 Frayazino (RU); OBRONOV, Ivan V., 141195 Frayazino (RU)
(74) Representative: Kobiako von Gamm, Iouri
(86) International application number: PCT/EP2020/058826
(87) International publication number: WO 2021/043450

(56) References cited:
- US-A1- 2006 175 301
- US-A1- 2015 166 397
- US-A1- 2015 306 706
- US-A1- 2017 028 505

## Description

The invention relates to the field of laser technique, specifically to pulsed scanning lasers used to cut brittle substrates (see, for example, US2015/166397, on which the preamble of claim 1 is based).

### BACKGROUND OF THE INVENTION

Pulsed lasers are widely used in semiconductor industry for scribing of thin, up to 1 mm, substrates made of silicon, germanium, gallium arsenide and other semiconductors as well as ceramic and glass substrates. Prior art describes various methods of forming the cleave line, ranging from the V-shaped groove during laser scribing to ablation or melting of the material on its top or bottom surfaces (US20190169062A1). However, after this operation there is a need either to apply a mechanical force to the laser-treated material or to create a thermally deforming wave by heating (or local cooling) the material. Either of these actions does not always have a favourable outcome - cleaving without chips, microcracks and defects.

Femto- and pico-second lasers are used to prepare substrates, including thick substrates made of glass, for cleaving. Prior art (US10233112B2) describes a method of perforation of thin glass substrates used as smartphone and display screens using a pico-second laser by perforating the glass and subsequently heating the perforation line with a second laser - a high power CO₂ laser - to induce a crack and cleave the glass. This method is not applicable to thick glass. Meanwhile, the use of the additional high power laser complicates the process. Such cutting problems arise during machining of thick shop window glass panes, laminated and tempered car windows, glass with a protective coating and armoured glass.

Prior art teaches a method of glass cutting by creating a grid of filaments (tracks) as a result of laser beam self-focusing due to the presence of nonlinear effects in glass. During beam filamentation, a hollow track of several hundred micrometers long is created in the body of the substrate (RU2013102422A or in the international publication, WO2012006736A2, as well as in US9757815B2), thereby making it possible to create a series of tracks, including near the back surface, to prepare the substrate for cleaving. The filamentation method also imposes limitations on the cutting of thick glass: it cannot be applied glass having the thickness of 6 mm or greater due to the geometry of the optics (this requires a micro-lens with a short focal distance or dedicated optics that can ensure a long focus and an interference pattern within the glass body - a Bessel beam). The laser beam waist has to be formed deeper into the substrate's body in order to eliminate breakdown in the near-surface region. In light of the fact that the array of tracks is not continuous, certain fundamental limitations apply during its formation: during focusing and self-focusing there must not be any boundary interference from nearby irregularities and filaments. Limitations with respect to the glass thickness also apply: there is a need for multi-pass scanning along the surface of the substrate in order to fill the substrate body with filaments that are far apart from each other (due to the conditions of their formation), which imposes a limitation on the accuracy of alignment of arrays of filament grids. Contour precision should be at least 4 micrometers. This method calls for using a complex and high-precision system for tracking the movement trajectory and repeatability of trajectories; during multi-pass cutting, this adversely affects the cutting quality and may result in chips during unavoidable final splitting of the glass substrate after cutting using the filamentation method. All of this makes it impossible to cleave the material without applying a mechanical force and imposes limitations on the industrial applicability of the method.

### DISCLOSURE OF THE INVENTION

The present invention proposes a method for cleaving brittle materials of the substrate that are transparent to the laser beam and do not absorb it too much, along a practically continuous stressed edge in the body of the substrate formed as a result of laser-induced breakdown of the material. The effect of the method can be readily illustrated using the example of cutting of thick glass having a thickness of 20 mm or greater - up to 30 mm. This cleaving, substantially continuous stressed edge consists of micro-cavities. The latter are formed as a result of the induced breakdown which in turn is caused by the laser beam focused in the body of the substrate. The laser beam strikes the surface of the body at an angle while it moves progressively along the surface. Simultaneously with the progressive movement, the beam is continuously and rapidly oscillating in the same plane in which it is moving progressively. This ensures continuous scanning of the entire substrate section by the beam. The method is not sensitive to the direction of beam movement in the substrate section from the upper or bottom surface of the substrate. Importantly, the focused laser beam cyclically penetrates the entire thickness of the substrate body, which is particularly important considering the once-chosen long-focal (150-350 mm) distance of the lens of the optical system, which remains unchanged through the entire process of forming the stressed edge for cleaving the substrate upon its completion.

The technical result is better quality of straight, curvilinear or angled edge of cleaving of the substrate in the absence of uncontrollable chips and microcracks, a high rate of formation of the stressed cleaving edge, which implies faster laser cutting, owing to the absence of:
- reconfiguration of the optical system to focus the laser beam during its scanning across the entire depth of the substrate body,
- process interruptions to reconfigure the depth of formation of the layer of the stressed edge within the substrate body, irrespective of the direction of beam movement from the upper or bottom surface of the substrate,
and owing to the presence of the maximum possible number of optically induced breakdown cavities in the body of the substrate material during progressive continuous movement of the scanning system along the length of the substrate, which generally improves the strength properties of products made of substrates cleaved using the proposed method.

The displacement of the beam and substrate relative to one another is not only limited to a linear or curvilinear path. The scope of the invention includes rotational displacement of the beam and substrate relative one another which in combination with the linear displacement produces holes in the substrate. Furthermore, as disclosed above, the inventive system may produce angled or curved edges. If the treated substrate is not fully split, a thulium (Tm) laser, preferably, but not necessarily, a Tm fiber laser can be used to provide a final "touch" leading to the separation of the cut substrate pieces with respective smooth edges.

Other advantages and distinctive features of the proposed invention will become obvious from the following detailed description of its essence, with references to the accompanying drawings.

### BRIEF DESCRIPTION OF THE FIGURES

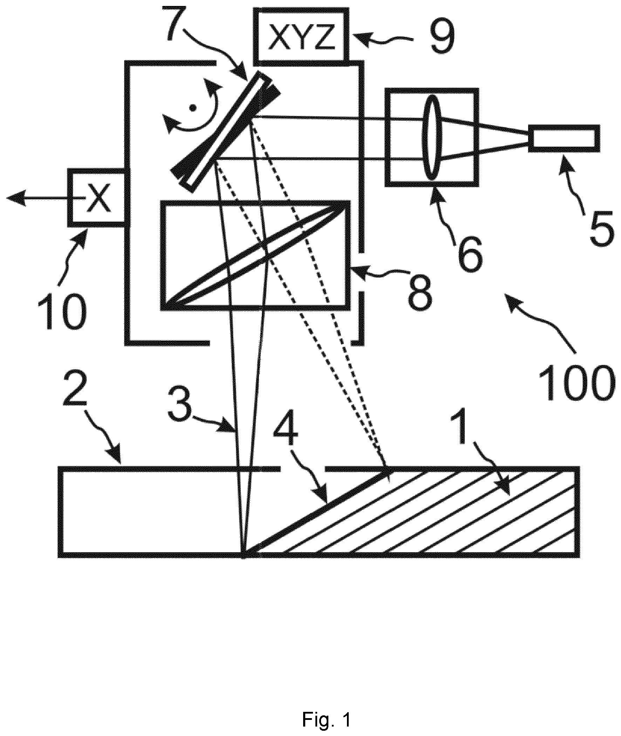

Sole figure is a schematic diagram of the process of forming the stressed cleaving edge in the body of the substrate with the laser beam positioned at an angle, frontal view.

### EMBODIMENTS OF THE INVENTION

The essence of the claimed invention is reflected in the following features and details.

The general details of the invention are illustrated by the figure and relate to the inventive method that embodies it. To provide a stressed edge (1) in a substrate (2) made of a material transparent to a laser beam, a focused laser beam with a fixed focal distance is incident thereon during the course of angled scanning of the beam. As the beam and substrates (2) linearly move relative to one another, a track of cavities is formed in the substrate body through local optically induced breakdown of the material during its irradiation. As the beam irradiates the substrate in the above-disclosed manner, the following takes place:
- an essentially linear chain (4) of narrowly spaced cavities (at least one cavity per each pulse) is formed in the body of the material in a single pass of the beam (3) in the direction from one surface of the substrate to the opposite surface, and
- during the other (consecutive) pass of the beam, relative progressive longitudinal movement of the beam and the substrate results in the formation of the next narrowly-spaced chain of cavities.
The end result of the progressive longitudinal movement and angled cyclical scanning of the beam in the plane of this movement is an essentially continuous track of optically induced cavities in the form of the internal bubbly stressed edge (1) along which the substrate is cleaved without chipping defects upon completion of the process of longitudinal movement of the beam along the entire length of the substrate (2).

The device implementing the above disclosed inventive method is configured with a pulsed laser source (5). The latter may be selected from a solid-state laser or a fibre laser. The emitted laser beam is collimated in a collimator (6) and thereafter it strikes a beam deflection system or scanner (7). The scanner (7) ensures cyclical scanning of the beam through the thickness of the substrate from top surface to the opposite surface or conversely since the direction - direct or reverse - is irrelevant). An optical focusing system (8) ensures beam focusing and has a setting that does not change throughout the entire machining process. During this process, the angle of incidence of the laser beam onto the surface varies from 90° to about 40.5° depending on the desired shape of the cleave relative to the normal to the surface of the substrate For example, this angle can be slightly less than 60 degrees when forming a straight cleave. If the cleave is oblique or bevelled, smaller angles of incidence of up to 45° are required. Note that as the angle of incidence increases, light losses also increase due to deflection at higher angles. It has been determined that the angle at which the cut is formed relative to the surface of the substrate should be preferably limited to a 45 - 90° range. The desired angle is set by the beam spatial orientation system (9) along the spatial axes XYZ relative to the surface of the substrate. The longitudinal progressive movement of the beam (3) along the surface of the substrate (2) is ensured by the actuator (10) responsible for its unidirectional progressive movement along axis X over a fixed substrate with a lead ahead of the region in which the stressed edge forms. Note that the scanner (7) and the optical focusing system (8) may be positioned also at another angle relative to the surface of the workpiece comparing to what is shown in the figure.

It is important to note that the deflection system (7), which scans in one plane and is uniaxial at a minimum, for high-speed scanning of the beam (3) in the transverse direction relative to the substrate (2) can be implemented on the basis of both a galvano scanner and a polygon, the latter being the preferred solution because the polygon ensures uniform distribution of optically induced breakdown cavities.

Notably, the stressed edge (up to 30 mm thick) essentially forms across the entire body of the thick substrate with the distance between optically induced breakdown cavities in the micrometer range, which is determined by the dimensions of cavities and the rates of scanning in both the transverse angled direction and the longitudinal direction.

Notably, optically induced breakdown is achieved by a pulsed femto- or pico- or nano-second focused laser beam source with a sufficient pulse energy for optically induced breakdown of the material, with a wavelength in the range from ultraviolet to infrared waves, but on condition of their weak absorption in the material being machined.

Importantly, a material transparent to a laser beam can contain one or more layers and be chosen from glass, quartz, semiconductor, dielectric, polymer material, crystal, sapphire, and/or diamond-like films. In engineering, the substrate made of a transparent material is chosen for purposes of creating information display devices - flat screens or TV screens, or for cutting of window panes, mirrors, laminated car window glass, armoured window glass, or transparent ceramics.

This invention has been successfully tested in cutting of glass 4 to 20 mm thick, including laminated glass, with the use of the YLPP-50-10-100-R pico-second fibre ytterbium laser (IRE-Polys, https://www.ipgphotonics.com/ru_).

The pulse length is 10-20 ps; the pulse energy is up to 100 µJ; and the pulse repetition rate is up to 2 MHz. Glass 20 mm thick has been cut using a scanning system based on a galvano scanner; the beam incidence angle is 40.5 degrees; the deflection angle is ±4.5 degrees; the focal distance of the focusing system based on an F-Theta lens is 260 mm; the coefficient of reflection from the glass surface is in the range of 4.6 to 5.2%; and the rate of longitudinal movement is up to 40 mm/s. However, other configurations or modifications of the above-mentioned setup, especially with regard to wavelength, pulse energy, pulse repetition rate and/or pulse duration, can be also be chosen by a person skilled in the art, for example as described in the U.S. patents 9,296,066 or 10,399,184.

The laser beam and substrate can rotate relative to one another to drill holes in the substrate. Furthermore, the disclosed system can produce curved edges. If the treated substrate is not fully cleaved, a thulium (Tm) laser, preferably, but not necessarily, a Tm fiber laser can be used to provide a final "touch" leading to the separation of the cut substrate pieces with respective smooth edges.

It should be obvious to a person skilled in this field of engineering that the invention is not limited to the embodiment options presented above and that it can be modified within the scope of the claims of the presented invention.

## Claims

1. A method for forming a stressed edge (1) for cleaving a substrate (2) made of a material transparent to a laser beam, to which end a track of cavities is formed in a body of the substrate (2) through local optically induced breakdown of the material during its irradiation with a focused laser beam (3), **characterized by**:
using a focused laser beam (3) from a pulsed femto- or pico- or nano-second focused laser beam source (5) with sufficient pulse energy for optically inducing breakdown of the material with a fixed focal distance during scanning;
performing scanning of the laser beam (3) with longitudinal movement along a length of the substrate (2), wherein the laser beam (3) is provided with an angle of incidence onto the surface of the substrate set in a range from 90° to about 40,5° to the surface of the substrate (2) depending of the angle at which the cleaving is to be formed relative to the surface of the substrate;
performing a first pass of the laser beam (3) in a direction from one surface of the substrate (2) to the opposite surface and forming an essentially angular linear chain (4) of narrowly spaced cavities with at least one cavity per each pulse in the body of the substrate (2);
performing another pass of the laser beam (3) with relative progressive longitudinal movement of the laser beam (3) and the substrate (2) and forming a next narrowly-spaced chain of cavities;
obtaining an essentially continuous track of optically induced cavities in the form of an internal bubbly stressed edge (1); and
cleaving the substrate (2) along the stressed edge (12).

2. Method of claim 1, wherein the other pass of the laser beam (3) is a reverse or returning pass of the laser beam (3) during progressive longitudinal movement of the laser beam (3), which is carried out continuously in the same direction over a substrate (2) fixed in place, with a lead relative to the region in which the stressed edge is being formed.

3. Method of claim 1 or 2, wherein the plane in which the stressed edge (1) is formed is orthogonal relative to the surface of the substrate (2) or tilted at an angle of at least 45 degrees to form an oblique stressed edge (1).

4. Method of one of the above claims, wherein the laser beam source (5) is based on a solid-state or fibre laser.

5. Method of one of the above claims, wherein a material transparent to the laser beam (3) contains one or more layers of materials chosen from the following series: glass, quartz, semiconductor, dielectric, polymer material, crystal, sapphire, diamond-like films.

## Patentansprüche

1. Verfahren zum Bilden eines belasteten Rands (1) zum Spalten eines Substrats (2), das aus einem für einen Laserstrahl transparenten Material hergestellt ist, wobei zu diesem Zweck in einem Körper des Substrats (2) durch lokalen optisch induzierten Bruch des Materials während seiner Bestrahlung mit einem fokussierten Laserstrahl (3) eine Spur von Hohlräumen gebildet wird, **gekennzeichnet durch**:
Verwenden eines fokussierten Laserstrahls (3) von einer fokussierten gepulsten Femto- oder Pico- oder Nanosekunden-Laserstrahlquelle (5) mit ausreichender Impulsenergie zum optischen Induzieren eines Buchs des Materials mit einer festen Brennweite während des Abtastens;
Ausführen eines Abtastens des Laserstrahls (3) mit Längsbewegung entlang einer Länge des Substrats (2), wobei der Laserstrahl (3) in Abhängigkeit von dem Winkel, unter dem die Spaltung relativ zu der Oberfläche des Substrats gebildet werden soll, mit einem Einfallswinkel auf die Oberfläche des Substrats, der in einem Bereich von 90° bis etwa 40,5° relativ zu der Oberfläche des Substrats (2) eingestellt ist, bereitgestellt wird;
Ausführen eines ersten Durchlaufs des Laserstrahls (3) in einer Richtung von einer Oberfläche des Substrats (2) zu der gegenüberliegenden Oberfläche und Bilden einer wesentlich angewinkelten linearen Kette (4) eng beabstandeter Hohlräume mit wenigstens einem Hohlraum pro jedem Impuls in dem Körper des Substrats (2);
Ausführen eines weiteren Durchlaufs des Laserstrahls (3) mit relativ fortschreitender Längsbewegung des Laserstrahls (3) und des Substrats (2) und Bilden einer nächsten eng beabstandeten Kette von Hohlräumen;
Erhalten einer im Wesentlichen ununterbrochen Spur optisch induzierter Hohlräume in Form eines mit internen Blasen belasteten Rands (1); und
Spalten des Substrats (2) entlang des belasteten Rands (12).

2. Verfahren nach Anspruch 1, wobei der weitere Durchlauf des Laserstrahls (3) ein Rückwärts- oder Rückkehrdurchlauf des Laserstrahls (3) während der fortschreitenden Längsbewegung des Laserstrahls (3) ist, der mit einem Vorlauf relativ zu dem Gebiet, in dem der belastete Rand gebildet wird, ununterbrochen in derselben Richtung über ein an seiner Stelle befestigtes Substrat (2) ausgeführt wird.

3. Verfahren nach Anspruch 1 oder 2, wobei die Ebene, in der der belastete Rand (1) gebildet wird, relativ zu der Oberfläche des Substrats (2) orthogonal oder unter einem Winkel von wenigstens 45 Grad gekippt ist, um einen schrägen belasteten Rand (1) zu bilden.

4. Verfahren nach einem der obigen Ansprüche, wobei die Laserstrahlquelle (5) auf einem Festkörper- oder Faserlaser beruht.

5. Verfahren nach einem der obigen Ansprüche, wobei das für den Laserstrahl (3) transparente Material eine oder mehrere Schichten von Materialien enthält, die aus der folgenden Reihe gewählt sind: Glas, Quarz, Halbleiter, Dielektrikum, Polymermaterial, Kristall, Saphir, diamantartige Filme.

## Revendications

1. Procédé consistant à former un bord contraint (1) destiné à cliver un substrat (2) en matériau transparent à un faisceau laser, permettant la formation d'une piste de cavités dans un corps du substrat (2) par rupture locale du matériau induite optiquement pendant son irradiation par un faisceau laser focalisé (3), **caractérisé par** :
l'utilisation d'un faisceau laser focalisé (3) provenant d'une source de faisceau laser focalisé pulsé de l'ordre de la femtoseconde, de la picoseconde ou de la nanoseconde (5), avec une énergie d'impulsion suffisante pour induire optiquement la rupture du matériau avec une distance focale fixe pendant le balayage ;
la réalisation d'un balayage du faisceau laser (3) avec un mouvement longitudinal le long d'une longueur du substrat (2), le faisceau laser (3) étant pourvu d'un angle d'incidence sur la surface du substrat défini dans une plage de 90° à environ 40,5° par rapport à la surface du substrat (2) en fonction de l'angle auquel le clivage doit être formé par rapport à la surface du substrat ;
la réalisation d'un premier passage du faisceau laser (3) dans une direction allant d'une surface du substrat (2) à la surface opposée et la formation d'une chaîne linéaire essentiellement angulaire (4) de cavités étroitement espacées avec au moins une cavité par impulsion dans le corps du substrat (2) ;
la réalisation d'un autre passage du faisceau laser (3) avec un mouvement longitudinal progressif relatif du faisceau laser (3) et du substrat (2) et la formation d'une chaîne suivante de cavités étroitement espacées ;
l'obtention d'une piste essentiellement continue de cavités induites optiquement sous la forme d'un bord interne bombé sous contrainte (1) ; et
le clivage du substrat (2) le long du bord contraint (12).

2. Procédé selon la revendication 1, l'autre passage du faisceau laser (3) étant un passage inverse ou de retour du faisceau laser (3) pendant le mouvement longitudinal progressif du faisceau laser (3), lequel est effectué de manière continue dans la même direction sur un substrat (2) fixé en place, avec une avance par rapport à la région dans laquelle le bord contraint est en cours de formation.

3. Procédé selon la revendication 1 ou 2, le plan dans lequel le bord contraint (1) est formé étant orthogonal par rapport à la surface du substrat (2) ou incliné selon un angle d'au moins 45 degrés pour former un bord contraint oblique (1).

4. Procédé selon l'une des revendications précédentes, la source de faisceau laser (5) étant basée sur un laser à état solide ou à fibre.

5. Procédé selon l'une des revendications précédentes, un matériau transparent au faisceau laser (3) contenant une ou plusieurs couches de matériaux choisis parmi les séries suivantes : verre, quartz, semi-conducteur, diélectrique, matériau polymère, cristal, saphir, films de type diamant.
